# EUROPEAN PATENT APPLICATION

(11) **EP 2 568 385 A1**
(43) Date of publication of application: **13.03.2013**
(21) Application number: 11830212.4
(22) Date of filing: 19.08.2011
(51) Int. Cl.: G06F 12/00

(54) **AUTOMATIC THIN PROVISIONING METHOD AND DEVICE**

(30) Priority: 09.10.2010 CN 201010508078
(71) Applicant: Huawei Technologies Co., Ltd., Shenzhen, Guangdong 518129 (CN)
(72) Inventor: SHU, Tan, Sichuan 611731 (CN)
(74) Representative: Kreuz, Georg Maria
(86) International application number: PCT/CN2011/078627
(87) International publication number: WO 2012/045256

(57) **Abstract**

Embodiments of the present invention provide a method and an apparatus for thin provisioning. The method includes: receiving a write IO instruction sent by a host; when the write IO instruction is not allocated a logical space and a pre-allocated space in an LUN is insufficient to be allocated to the write IO instruction, requesting a PVG for a first logical space having first allocation granularity, and in the first logical space, adopting second allocation granularity to allocate a second logical space to the write IO instruction, where the first allocation granularity is larger than the second allocation granularity; and sending the write IO instruction to the PVG, so that the PVG allocates a corresponding physical space to the write IO instruction according to the second logical space and preconfigured correspondence between logical spaces and physical spaces. In the embodiments of the present invention, the storage performance can be provided.

## Description

This application claims priority to Chinese Patent Application No. 201010508078.6, filed with the Chinese Patent Office on October 9, 2010 and entitled "METHOD AND APPARATUS FOR THIN PROVISIONING", which is incorporated herein by reference in its entirety.

### FIELD OF THE INVENTION

The present invention relates to disk storage technologies, and in particular, to a method and an apparatus for thin provisioning.

### BACKGROUND OF THE INVENTION

In a thin provisioning (Thin Provisioning) technology, when a logical unit number (Logical Unit Number, LUN) is created for a user, a real physical space is not allocated to the user. When the user writes data into the LUN, the LUN allocates a physical space to an input output (Input Output, IO) instruction according to the size of the data. As the data written by the user increases, the physical space dynamically increases. In disk storage, the following two quality attributes are involved: the IO performance and a disk space utilization rate. The IO performance is related to a degree of dispersion of physical spaces for real storage of data. When the physical spaces for real storage of data are contiguous, the IO performance thereof is good. On the contrary, when the physical spaces for real storage of data are dispersed, the IO performance thereof is poor. The more dispersed the physical spaces are, the faster the IO performance drops. The disk space utilization rate is related to allocation granularity. Generally speaking, the larger the allocation granularity is, the lower the disk space utilization rate is.

In a process of implementing the present invention, the inventor finds that the prior art has at least the following problems. Adopting an allocation manner of large granularity may lead to a low utilization rate of a disk. Although adopting an allocation manner of small granularity may improve the disk utilization rate, when the allocation manner of small granularity is adopted to perform allocation in a whole physical space, the physical space is randomly dispersed because of the randomicity of a random IO access manner. Even a sequential IO access manner may disrupt the contiguity of the physical space of the LUN and lead to poor IO performance.

### SUMMARY OF THE INVENTION

Embodiments of the present invention provide a method and an apparatus for thin provisioning, so as to solve the problem of a low disk utilization rate or poor IO performance in the prior art.

On one aspect, an embodiment of the present invention provides a method for thin provisioning, which includes:
receiving a write IO instruction sent by a host; and
when the write IO instruction is not allocated a logical space and a logical space remaining in a logical unit number LUN is insufficient to be allocated to the write IO instruction, requesting a physical volume group PVG for a first logical space having first allocation granularity, and in the first logical space, adopting second allocation granularity to allocate a second logical space to the write IO instruction, where the first allocation granularity is larger than the second allocation granularity; and sending the write IO instruction to the PVG, so that the PVG allocates a corresponding physical space to the write IO instruction according to the second logical space and preconfigured correspondence between logical spaces and physical spaces.

On another aspect, an embodiment of the present invention provides a method for thin provisioning, which includes:
when a write IO instruction sent by a host is not allocated a logical space and a logical space remaining in an LUN is insufficient to be allocated to the write IO instruction, allocating, to the LUN, a logical space having first allocation granularity, so that the LUN adopts, in the first logical space, second allocation granularity to allocate a second logical space to the write IO instruction, where the first allocation granularity is larger than the second allocation granularity.

On one aspect, an embodiment of the present invention provides an apparatus for thin provisioning, which includes:
a write instruction receiving module, configured to receive a write IO instruction sent by a host; and
a first write module, configured to, when the write IO instruction is not allocated a logical space and a logical space remaining in a logical unit number LUN is insufficient to be allocated to the write IO instruction, request a physical volume group PVG for a first logical space having first allocation granularity, and in the first logical space, adopt second allocation granularity to allocate a second logical space to the write IO instruction, where the first allocation granularity is larger than the second allocation granularity; and send the write IO instruction to the PVG, so that the PVG allocates a corresponding physical space to the write IO instruction according to the second logical space and preconfigured correspondence between logical spaces and physical spaces.

On another aspect, an embodiment of the present invention provides an apparatus for thin provisioning, which includes:
an allocating module, configured to, when a write IO instruction sent by a host is not allocated a logical space and a logical space remaining in an LUN is insufficient to be allocated to the write IO instruction, allocate, to the LUN, a logical space having first allocation granularity, so that the LUN adopts, in the first logical space, second allocation granularity to allocate a second logical space to the write IO instruction, where the first allocation granularity is larger than the second allocation granularity.

As can be learned from the above technical solutions, in the embodiments of the present invention, the LUN obtains the logical space of the first allocation granularity by requesting the PVG, and adopts the second allocation granularity to allocate a logical space to an IO instruction. The second allocation granularity is smaller, so that a physical space corresponding to each IO instruction is small, which can improve a disk utilization rate. The LUN requests every time the PVG for the first logical space having the first allocation granularity. The first allocation granularity is larger, so that a physical space which is corresponding to each LUN and can be allocated to the IO instruction is larger, and concentration of physical spaces is implemented, thereby improving the IO performance.

### BRIEF DESCRIPTION OF THE DRAWINGS

To illustrate the technical solutions in the present invention or in the prior art more clearly, the following briefly describes the accompanying drawings required for describing the embodiments or the prior art. Apparently, the accompanying drawings in the following description merely show some embodiments of the present invention, and persons of ordinary skill in the art can derive other drawings from these accompanying drawings without creative efforts.

FIG. 1 is a schematic flow chart of a method in Embodiment 1 of the present invention;

FIG. 2 is a schematic diagram of allocating a physical space to an IO instruction in Embodiment 1 of the present invention;

FIG. 3 is a schematic flow chart of a method in Embodiment 2 of the present invention;

FIG. 4 is a flow chart after a physical address requested by an IO instruction is allocated a physical space in Embodiment 2 of the present invention;

FIG. 5 is a flow chart after a physical address requested by an IO instruction is not allocated a physical space in Embodiment 2 of the present invention;

FIG. 6 is a schematic flow chart when an LUN is insufficient to allocate a space to an IO instruction in Embodiment 2 of the present invention;

FIG. 7 is a schematic flow chart when an LUN is sufficient to allocate a space to the IO instruction in Embodiment 2 of the present invention;

FIG. 8 is a schematic flow chart of a method in Embodiment 3 of the present invention;

FIG. 9 is a schematic structural diagram of an apparatus in Embodiment 4 of the present invention;

FIG. 10 is a schematic structural diagram of an apparatus in Embodiment 5 of the present invention;

FIG. 11 is a schematic structural diagram of an apparatus in Embodiment 6 of the present invention; and

FIG. 12 is a schematic structural diagram of an apparatus in Embodiment 7 of the present invention.

### DETAILED DESCRIPTION OF THE EMBODIMENTS

The following clearly and completely describes the technical solutions according to the present invention with reference to the accompanying drawings in the present invention. Apparently, the embodiments in the following description are merely a part rather than all of the embodiments of the present invention. All other embodiments obtained by persons of ordinary skill in the art based on the embodiments of the present invention without creative efforts shall fall within the protection scope of the present invention.

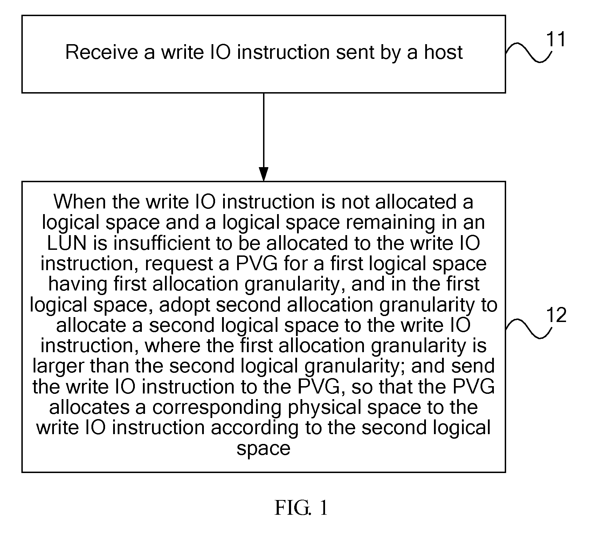

FIG. 1 is a schematic flow chart of a method in Embodiment 1 of the present invention, which includes:

Step 11: Receive a write IO instruction sent by a host.

Step 12: When the write IO instruction is not allocated a logical space and a logical space remaining in an LUN is insufficient to be allocated to the write IO instruction, request a physical volume group (Physical Volume Groups, PVG) for a first logical space having first allocation granularity, and in the first logical space, adopt second allocation granularity to allocate a second logical space to the write IO instruction, where the first allocation granularity is larger than the second allocation granularity; and send the write IO instruction to the PVG, so that the PVG allocates a corresponding physical space to the write IO instruction according to the second logical space.

An execution subject in this embodiment may be a control module of the LUN.

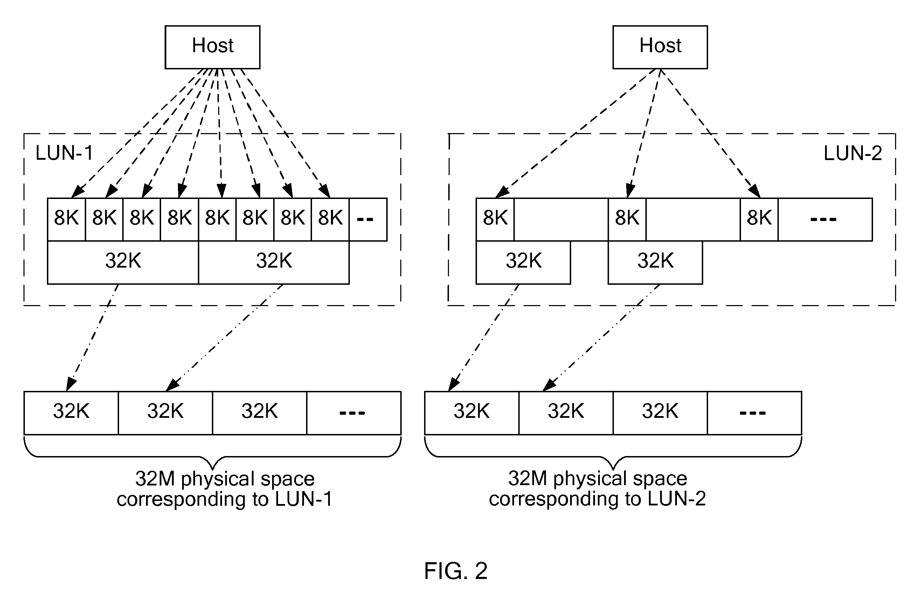

A space mapping diagram in the two-layer allocation manner may be shown in FIG. 2. FIG. 2 is a schematic diagram of allocating a physical space to an IO instruction in Embodiment 1 of the present invention. Referring to FIG. 2, an example that each IO instruction is 8 K, the first allocation granularity is 32 M, and the second allocation granularity is 32 K is taken for illustration. The embodiment of the present invention is not limited to a specific access manner, and may be applied to a sequential IO access manner or applied to a random IO access manner. Referring to FIG. 2, it is taken as an example that a first LUN adopts the sequential IO access manner and a second LUN adopts the random IO access manner. After the host delivers IO instructions to an LUN, the LUN is triggered to allocate, through the PVG, a corresponding physical space to each IO instruction. It should be noted that what is allocated by the PVG to the LUN is a logical space, and what is allocated by the LUN to the IO instruction is also a logical space. After the LUN sends the IO instruction to the PVG according to the logical space allocated to the IO instruction, the PVG may allocate the corresponding physical space to the IO instruction according to previously saved correspondence between physical spaces and logical spaces. In this embodiment, each LUN is corresponding to a physical space having larger granularity. For example, referring to FIG. 2, the first LUN and the second LUN each are corresponding to a physical space of 32M granularity. 32M physical spaces are set at intervals. After the host delivers an IO instruction, if a 32M physical space is sufficient to be allocated to the IO instruction (larger than or equal to 32 K), then in a 32M first logical space, smaller granularity (for example, 32 K) is adopted to allocate the second logical space to the IO instruction.

In order to improve a disk utilization rate, smaller allocation granularity may be adopted. That is, in this embodiment, the second allocation granularity is adopted to perform allocation. However, the manner of smaller granularity adopted in the prior art may make physical resources excessively dispersed. For example, because the physical space corresponding to each LUN is allocated at intervals, every time the allocation is performed, the physical space corresponding to each LUN is 32 K. However, in this embodiment, referring to FIG. 2, firstly a physical space of larger granularity is allocated to each LUN, which is specifically a 32M first physical space. At this time, even if the physical space corresponding to each LUN is still to be allocated at intervals, every time the allocation is performed, the physical space corresponding to each LUN is 32 M, which considerably increases capacity and avoids excessive dispersion of physical spaces.

In this embodiment, the LUN adopts the second allocation granularity to allocate a logical space to the IO instruction. The second allocation granularity is smaller, so that a physical space corresponding to each IO instruction is smaller, which improves the disk utilization rate. The LUN requests every time the PVG for the first logical space having the first allocation granularity. The first allocation granularity is larger, so that a physical space which is corresponding to each LUN and can be allocated to the IO instruction is larger, and concentration of physical spaces is implemented, thereby improving the IO performance.

In the embodiment of the present invention, the first allocation granularity may be an integer multiple of the second allocation granularity. Because the LUN performs the allocation in a space of the first allocation granularity by using the second allocation granularity, when the first allocation granularity is an integer multiple of the second allocation granularity, it can be avoided that the space remaining in the space of the first allocation granularity cannot be allocated, thereby avoiding a waste of the space. Further, the first allocation granularity may be ranged from 4 M to 1024 M, and the second allocation granularity may be ranged from 4 K to 1 M. For example, the first allocation granularity is 32 M, and the second allocation granularity is 32 K.

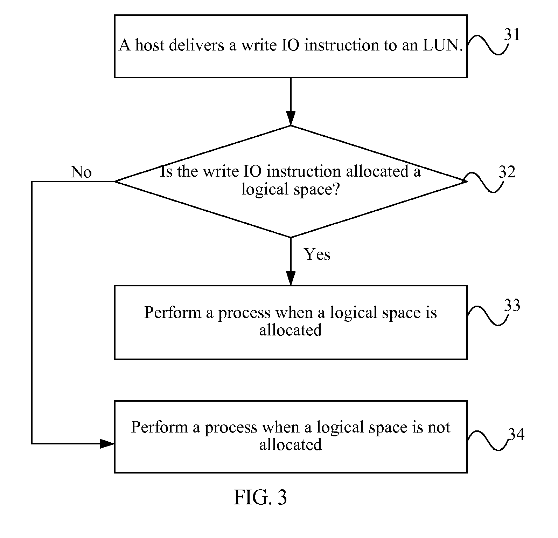

FIG. 3 is a schematic flow chart of a method in Embodiment 2 of the present invention. In this embodiment, an IO instruction being a write instruction is taken as an example. Referring to FIG. 3, this embodiment includes:

Step 31: A host delivers a write IO instruction to an LUN, where the write IO instruction contains a requested logical space.

The requested logical space refers to a logical space in the corresponding LUN. For example, a manner of "LUNID + offset" may be used to represent the requested logical space.

Step 32: The LUN determines whether the write IO instruction is allocated a logical space, if yes, perform step 33; otherwise, perform step 34.

An LUN mapping table is saved in the LUN. After the LUN allocates a logical space to an IO instruction, correspondence between a logical space requested by the IO instruction and a logical space in a PVG is saved in the LUN mapping table. Therefore, when the logical space requested by the IO instruction is saved in the LUN mapping table, it indicates that the IO instruction is allocated a logical space.

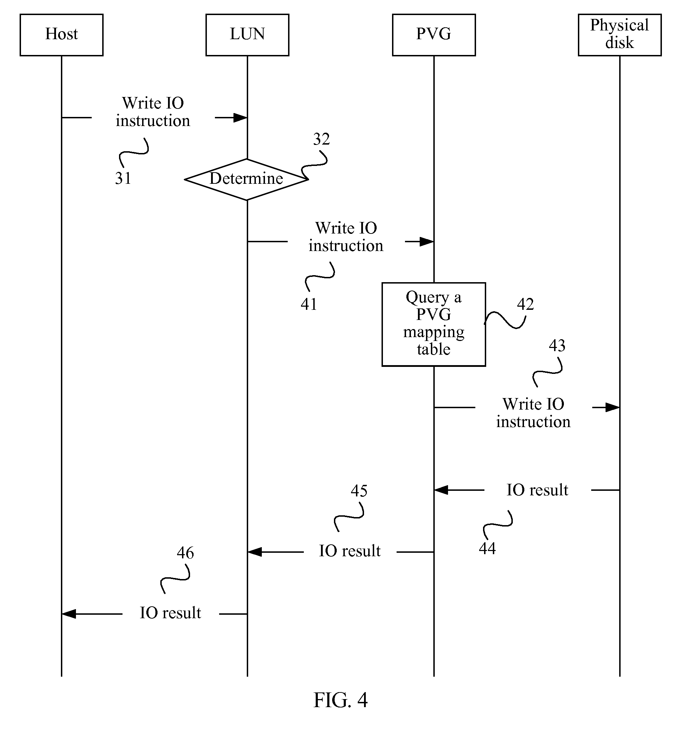

Step 33: Perform a process when a logical space is allocated, which may be specifically shown in FIG. 4.

FIG. 4 is a flow chart after the logical space requested by the IO instruction is allocated a logical space in the corresponding PVG in Embodiment 2 of the present invention. In order to better illustrate a relationship with the foregoing process, relevant steps in FIG. 3 are also shown in FIG. 4. Referring to FIG. 4, the following steps are included.

Step 41: The LUN delivers the write IO instruction to the PVG, where the write IO instruction contains the logical space allocated by the LUN to the write IO instruction.

The logical space allocated by the LUN to the write IO instruction is a logical space in the PVG, where the logical space in the PVG is corresponding to the logical space requested by the write IO instruction. The logical space allocated by the LUN to the write IO instruction may be represented by adopting a manner of "pvgID + offset".

Step 42: The PVG queries a PVG mapping table to determine a physical space corresponding to the logical space.

Correspondence between logical spaces and physical spaces is saved in the PVG mapping table. The physical space corresponding to the logical space may be determined by querying this mapping table.

Step 43: The PVG delivers the write IO instruction to the corresponding physical space in a physical disk.

When the corresponding physical space is found after query, the write IO instruction may be delivered to the physical disk containing the physical space.

Step 44: The physical disk returns an IO result to the PVG, for example, a write success or failure.

Step 45: The PVG returns the IO result to the LUN.

Step 46: The LUN returns the IO result to the host.

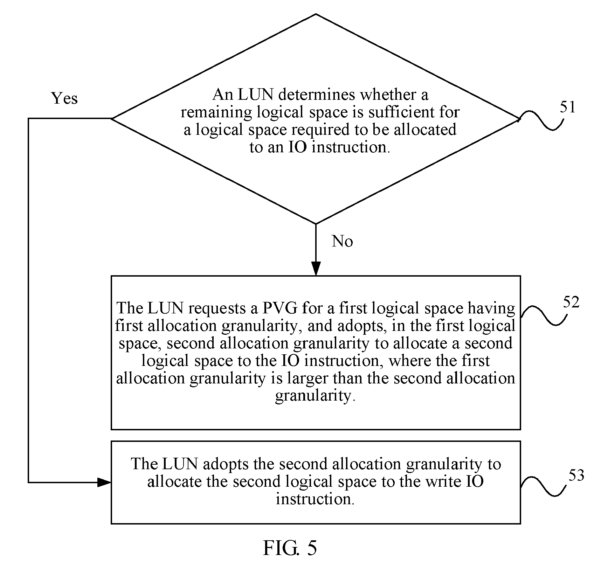

Step 34: Perform a process when a logical space is not allocated, which may be specifically shown in FIG. 5.

FIG. 5 is a flow chart after the logical space requested by the IO instruction is not allocated a logical space in the corresponding PVG in Embodiment 2 of the present invention. Referring to FIG. 5, the following steps are included.

Step 51: The LUN determines whether a remaining logical space is sufficient for a logical space required to be allocated to the write IO instruction, if yes, perform step 53; otherwise, perform step 52.

The logical space required to be allocated to the write IO instruction refers to the size of a logical space that can be triggered by each write IO instruction. For example, when small granularity is adopted for allocation, the logical space required to be allocated to the write IO instruction is 32 K.

Step 52: The LUN requests the PVG for a first logical space having first allocation granularity, and adopts, in the first logical space, second allocation granularity to allocate a second logical space to the IO instruction, where the first allocation granularity is larger than the second allocation granularity.

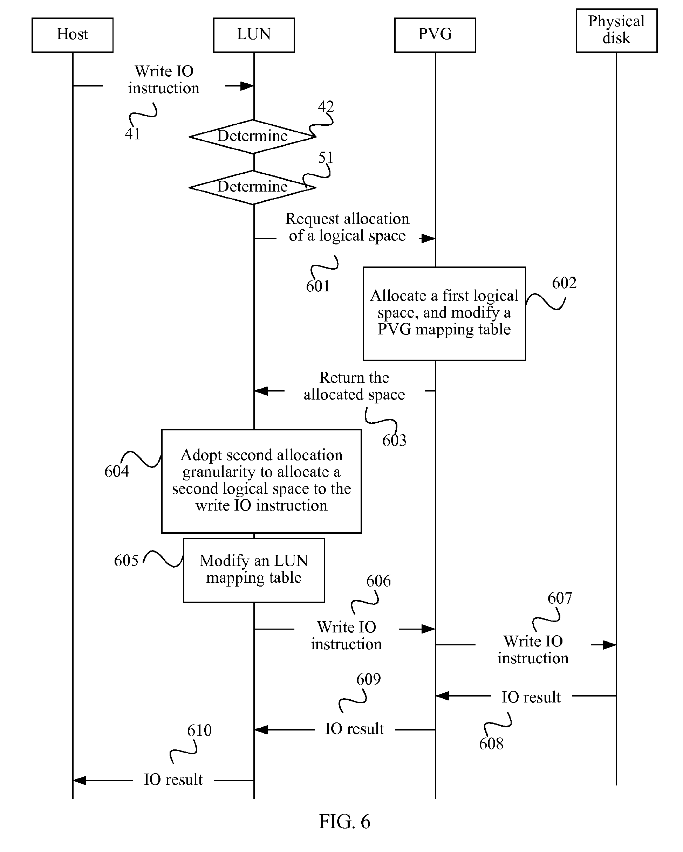

The two-layer allocation manner in step 52 may be specifically shown in FIG. 6. FIG. 6 is a schematic flow chart when the LUN is insufficient to allocate a space to the IO instruction in Embodiment 2 of the present invention. In order to better illustrate a relationship with the foregoing process, relevant steps in FIG. 3 and FIG. 5 are also shown in FIG. 6. The following steps are included.

Step 601: The LUN requests the PVG to allocate a logical space.

Step 602: The PVG allocates the first logical space to the LUN, and modifies the PVG mapping table.

The PVG adopts larger allocation granularity to allocate the first logical space to the LUN, for example, 32 M is used as the allocation granularity to allocate the first space.

The PVG mapping table indicates an allocation situation, for example, which part of the space is already allocated and which part of the space is not allocated, and indicates which part of the logical space is allocated to which LUN.

Step 603: The PVG returns the allocated space to the LUN, for example, pvgID + offset is used to represent the allocated space.

Step 604: In the first logical space, the LUN allocates a space to the write IO instruction by using the second allocation granularity, where the second allocation granularity is of a smaller value, for example, 32 K.

Step 605: The LUN modifies the LUN mapping table.

The logical space allocated by the LUN to the write IO instruction is a logical space in the corresponding PVG. Therefore, correspondence between a requested logical space and the logical space in the corresponding PVG is saved in the LUN mapping table.

Step 606: The LUN delivers, to the PVG, the write IO instruction which carries the logical space allocated by the LUN to the write IO instruction.

Step 607: The PVG sends the write IO instruction to a corresponding physical disk according to a saved relationship between logical spaces and physical spaces.

Step 608: The physical disk returns an IO result to the PVG, for example, a success or failure.

Step 609: The PVG returns the IO result to the LUN.

Step 610: The LUN returns the IO result to the host.

Hereupon, the two-layer allocation for the IO instruction is completed.

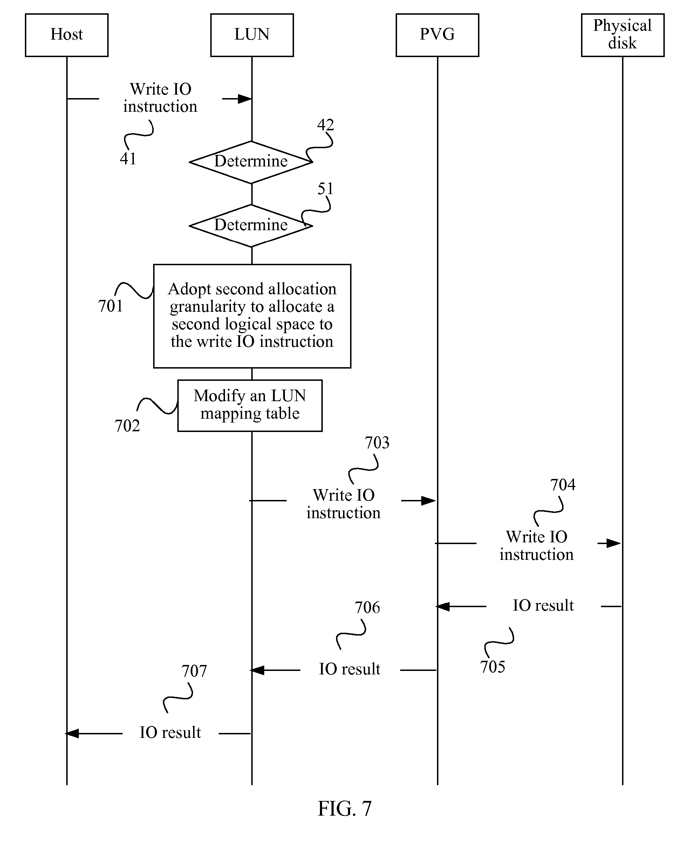

Step 53: The LUN adopts the second allocation granularity to allocate the second logical space to the write IO instruction, which may be specifically shown in FIG. 7.

FIG. 7 is a schematic flow chart when the LUN is sufficient to allocate a space to the IO instruction in Embodiment 2 of the present invention. In order to better illustrate a relationship with the foregoing process, relevant steps in FIG. 3 and FIG. 5 are also shown in FIG. 7. Referring to FIG. 7, this embodiment includes:

Step 701: In the remaining logical space, the LUN allocates a space to the write IO instruction by using the second allocation granularity, where the second allocation granularity is of a smaller value, for example, 32 K.

Step 702: The LUN modifies the LUN mapping table.

The logical space allocated by the LUN to the write IO instruction is a logical space in the corresponding PVG. Therefore, correspondence between the requested logical space and the logical space in the corresponding PVG is saved in the LUN mapping table.

Step 703: The LUN delivers, to the PVG, the write IO instruction which carries the logical space in the corresponding PVG.

Step 704: The PVG sends the write IO instruction to a corresponding physical disk according to a saved relationship between logical spaces and physical spaces.

Step 705: The physical disk returns, to the PVG, an IO result, for example, a success or failure.

Step 706: The PVG returns the IO result to the LUN.

Step 707: The LUN returns the IO result to the host.

In this embodiment, when an LUN space is insufficient in the processing of the write IO instruction, the two-layer allocation manner is adopted to request the allocation space of the first granularity and the allocation space of the second granularity, so as to avoid excessive dispersion of resources and improve the disk utilization rate.

Through the above description, the following steps are performed on a PVG side.

When the write IO instruction sent by the host is not allocated a logical space and the logical space remaining in the LUN is insufficient to be allocated to the write IO instruction, the PVG allocates, to the LUN, the logical space having the first allocation granularity, so that the LUN adopts, in the first logical space, the second allocation granularity to allocate the second logical space to the write IO instruction, where the first allocation granularity is larger than the second allocation granularity.

Or, when the write IO instruction is allocated a logical space, the PVG receives the write IO instruction sent by the LUN, where the write IO instruction contains the logical space allocated by the LUN to the IO instruction; and delivers the IO instruction to the corresponding physical disk according to the logical space allocated to the IO instruction and the preconfigured correspondence between logical spaces and physical spaces.

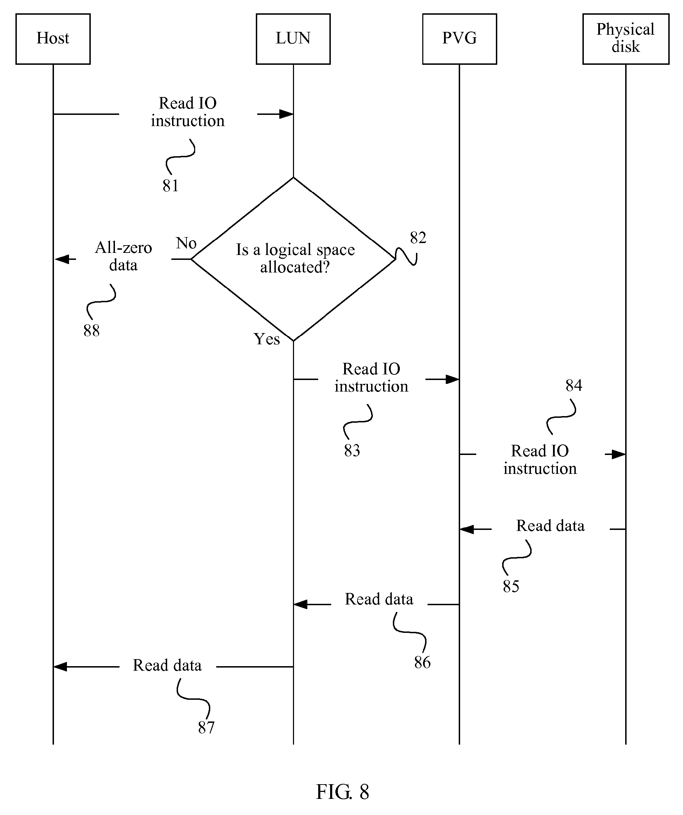

FIG. 8 is a schematic flow chart of a method in Embodiment 3 of the present invention. In this embodiment, An IO instruction being a read instruction is taken as an example. Referring to FIG. 8, this embodiment includes:

Step 81: A host delivers, to an LUN, a read IO instruction which carries a logical space requested by the read IO instruction.

Step 82: The LUN queries an LUN mapping table, and the LUN determines whether the read IO instruction is allocated a logical space, if yes, perform step 83; otherwise, perform step 88.

The LUN mapping table is saved in the LUN. After the LUN allocates a logical space to an IO instruction, correspondence between a logical space requested by the IO instruction and a logical space in a PVG is saved in the LUN mapping table. Therefore, when a physical address requested by the IO instruction is saved in the LUN mapping table, it indicates that the IO instruction is allocated a logical space.

Step 83: The LUN delivers the read IO instruction to the PVG, where the read IO instruction contains the logical space allocated by the LUN to the read IO instruction, that is, a logical space in the PVG, where the logical space in the PVG is corresponding to the logical space requested by the read IO instruction.

Step 84: The PVG queries a PVG mapping table, and delivers the read IO instruction to a corresponding physical disk.

Correspondence between logical spaces and physical spaces is saved in the PVG mapping table. When a corresponding physical space is obtained, the read IO instruction may be delivered to the physical disk containing the physical space.

Step 85: The physical disk returns read data to the PVG.

Step 86: The PVG returns the read data to the LUN.

Step 87: The LUN returns the read data to the host.

Step 88: The LUN returns all-zero data to the host.

When the physical address requested by the read IO instruction is not allocated a logical space, it indicates that the requested physical address is not written with data, so that all zeros are returned.

In order to improve a disk utilization rate and IO performance, the PVG needs to be set in the write process. Therefore, a corresponding read process after the PVG is set needs to be considered. In this embodiment, the corresponding read process when the PVG is set is provided, which implements a read operation based on the PVG.

Viewed from a single side, the LUN and the PVG perform the following steps, respectively.

The LUN receives the read IO instruction delivered by the host. When the read IO instruction is allocated a logical space, the LUN delivers the read IO instruction to the PVG, where the read IO instruction contains the allocated logical space, so that the PVG reads data from the physical space corresponding to the IO instruction according to the allocated logical space and the preconfigured correspondence between logical spaces and physical spaces.

Alternatively, when the read IO instruction is not allocated a logical space, all-zero data is returned to the host.

For the PVG, when the read IO instruction delivered by the host is allocated a logical space, the PVG receives the read IO instruction forwarded by the LUN, where the IO instruction contains the logical space allocated by the LUN to the read IO instruction, and according to the logical space allocated to the read IO instruction and the preconfigured correspondence between logical spaces and physical spaces, the PVG reads data from the physical space corresponding to the read IO instruction, and returns the data to the host through the LUN.

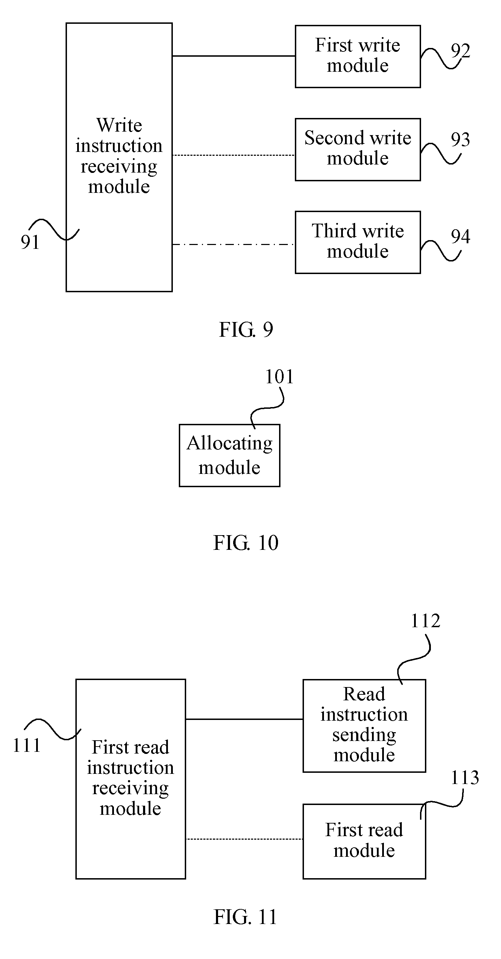

FIG. 9 is a schematic structural diagram of an apparatus in Embodiment 4 of the present invention. The apparatus in this embodiment may be located in an LUN. The apparatus in this embodiment includes a write instruction receiving module 91 and a first write module 92. The write instruction receiving module 91 is configured to receive a write IO instruction sent by a host. The first write module 92 is configured to, when the write IO instruction is not allocated a logical space and a logical space remaining in the LUN is insufficient to be allocated to the write IO instruction, request a PVG for a first logical space having first allocation granularity, and in the first logical space, adopt second allocation granularity to allocate a second logical space to the write IO instruction, where the first allocation granularity is larger than the second allocation granularity; and send the write IO instruction to the PVG, so that the PVG allocates a corresponding physical space to the write IO instruction according to the second logical space and preconfigured correspondence between logical spaces and physical spaces.

Alternatively, this embodiment includes a write instruction receiving module 91 and a second write module 93. The second write module 93 is configured to, when the write IO instruction is not allocated a logical space and the logical space remaining in the LUN is sufficient to be allocated to the write IO instruction, adopt the second allocation granularity to allocate the second logical space to the write IO instruction; and send the write IO instruction to the PVG, so that the PVG allocates a corresponding physical space to the write IO instruction according to the second logical space and the preconfigured correspondence between logical spaces and physical spaces.

Alternatively, this embodiment includes a write instruction receiving module 91 and a third write module 94. The third write module 94 is configured to, when the write IO instruction is allocated a logical space, deliver the write IO instruction to the PVG, where the IO instruction contains the allocated logical space, so that the PVG allocates a corresponding physical space to the write IO instruction according to the allocated logical space and the preconfigured correspondence between logical spaces and physical spaces.

In this embodiment, the LUN adopts the second allocation granularity to allocate a logical space to an IO instruction, and the second allocation granularity is smaller, so that a physical space corresponding to each IO instruction is smaller, which improves a disk utilization rate. The LUN requests every time the PVG for the first logical space having the first allocation granularity, and the first allocation granularity is larger, so that a physical space which is corresponding to each LUN and can be allocated to the IO instruction is larger, and concentration of physical resources is implemented, thereby improving IO performance.

FIG. 10 is a schematic structural diagram of an apparatus in Embodiment 5 of the present invention. The apparatus in this embodiment may be located in a PVG. The apparatus in this embodiment includes an allocating module 101. The allocating module 101 is configured to, when a write IO instruction sent by a host is not allocated a logical space and a logical space remaining in an LUN is insufficient to be allocated to the write IO instruction, allocate, to the LUN, a logical space having first allocation granularity, so that the LUN adopts, in the first logical space, second allocation granularity to allocate a second logical space to the write IO instruction, where the first allocation granularity is larger than the second allocation granularity.

Alternatively, this embodiment includes a write instruction forwarding module. The write instruction forwarding module is configured to, when the write IO instruction is allocated a logical space, receive the write IO instruction sent by the LUN, where the write IO instruction contains the logical space allocated by the LUN to the write IO instruction; and deliver the write IO instruction to a corresponding physical disk according to the logical space allocated to the write IO instruction and preconfigured correspondence between logical spaces and physical spaces.

In this embodiment, the LUN adopts the second allocation granularity to allocate a logical space to an IO instruction, and the second allocation granularity is smaller, so that a physical space corresponding to each IO instruction is smaller, which improves a disk utilization rate. The LUN requests each time the PVG for the first logical space having the first allocation granularity, and the first allocation granularity is larger, so that a physical space which is corresponding to each LUN and can be allocated to the IO instruction is larger, and concentration of physical resources is implemented, thereby improving IO performance.

FIG. 11 is a schematic structural diagram of an apparatus in Embodiment 6 of the present invention. The apparatus in this embodiment may be located in an LUN. The apparatus in this embodiment includes a first read instruction receiving module 111 and a read instruction sending module 112. The first read instruction receiving module 111 is configured to receive a read IO instruction delivered by a host. The read instruction sending module 112 is configured to, when the read IO instruction is allocated a logical space, deliver the read IO instruction to a PVG, where the IO read instruction contains the allocated logical space, so that the PVG reads data from a physical space corresponding to the read IO instruction according to the allocated logical space and preconfigured correspondence between logical spaces and physical spaces.

Alternatively, this embodiment includes a first read instruction receiving module 111 and a first read module 113. The first read module 113 is configured to, when the read IO instruction is not allocated a logical space, return all-zero data to the host.

In order to improve a disk utilization rate and IO performance, the PVG needs to be set in the write process. Therefore, a corresponding read process after the PVG is set needs to be considered. In this embodiment, the corresponding read process when the PVG is set is provided, which implements a read operation based on the PVG.

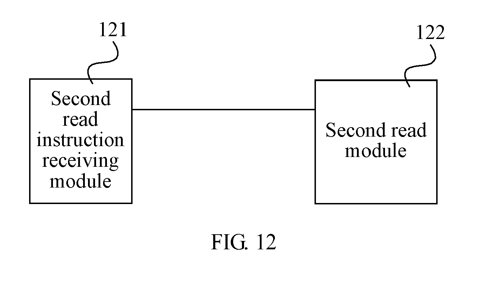

FIG. 12 is a schematic structural diagram of an apparatus in Embodiment 7 of the present invention. The apparatus in this embodiment may be located in a PVG. The apparatus in this embodiment includes a second read instruction receiving module 121 and a second read module 122. The second read instruction receiving module 121 is configured to, when a read IO instruction delivered by a host is allocated a logical space, receive the read 10 instruction forwarded by an LUN, where the read IO instruction contains the logical space allocated by the LUN to the read IO instruction. The second read module 122 is configured to, according to the logical space allocated to the read IO instruction and preconfigured correspondence between logical spaces and physical spaces, read data from a physical space corresponding to the read IO instruction, and return the data to the host through the LUN.

In order to improve a disk utilization rate and IO performance, the PVG needs to be set in the write process, so that a corresponding read process after the PVG is set needs to be considered. In this embodiment, the corresponding read process when the PVG is set is provided, which implements a read operation based on the PVG.

Persons of ordinary skill in the art should understand that all or part of the steps of the methods in the embodiments may be implemented by a program instructing relevant hardware. The program may be stored in a computer readable storage medium. When the program runs, the above steps of the methods in the embodiments are performed. The storage medium may be any medium capable of storing program codes, such as a ROM, a RAM, a magnetic disk, or an optical disk.

Finally, it should be noted that the preceding embodiments are merely intended for describing the technical solutions of the present invention other than limiting the present invention. Although the present invention is described in detail with reference to the foregoing embodiments, persons of ordinary skill in the art should understand that they can still make modifications to the technical solutions described in the foregoing embodiments or make equivalent substitutions to some technical features thereof, and such modifications or equivalent substitutions cannot make the essence of the corresponding technical solutions depart from the idea and scope of the technical solutions of the embodiments of the present invention.

## Claims

1. A method for thin provisioning, comprising:
receiving a write IO instruction sent by a host; and
when the write IO instruction is not allocated a logical space and a logical space remaining in a logical unit number LUN is insufficient to be allocated to the write IO instruction, requesting a physical volume group PVG for a first logical space having first allocation granularity, and in the first logical space, adopting second allocation granularity to allocate a second logical space to the write IO instruction, wherein the first allocation granularity is larger than the second allocation granularity; and sending the write IO instruction to the PVG, so that the PVG allocates a corresponding physical space to the write IO instruction according to the second logical space and preconfigured correspondence between logical spaces and physical spaces.

2. The method according to claim 1, further comprising:
when the write IO instruction is not allocated a logical space and the logical space remaining in the LUN is sufficient to be allocated to the write IO instruction, adopting the second allocation granularity to allocate the second logical space to the write IO instruction; and sending the write IO instruction to the PVG, so that the PVG allocates a corresponding physical space to the write IO instruction according to the second logical space and the preconfigured correspondence between logical spaces and physical spaces.

3. The method according to claim 1, further comprising:
when the write IO instruction is allocated a logical space, delivering the write IO instruction to the PVG, wherein the write IO instruction contains the allocated logical space, so that the PVG allocates a corresponding physical space to the write IO instruction according to the allocated logical space and the preconfigured correspondence between logical spaces and physical spaces.

4. The method according to claim 1, further comprising:
receiving a read IO instruction delivered by the host; and
when the read IO instruction is allocated a logical space, delivering the read IO instruction to the PVG, wherein the read IO instruction contains the allocated logical space, so that the PVG reads data from a physical space corresponding to the read IO instruction according to the allocated logical space and the preconfigured correspondence between logical spaces and physical spaces.

5. The method according to claim 4, further comprising:
when the read IO instruction is not allocated a logical space, returning all-zero data to the host.

6. A method for thin provisioning, comprising:
when a write IO instruction sent by a host is not allocated a logical space and a logical space remaining in an LUN is insufficient to be allocated to the write IO instruction, allocating, to the LUN, a logical space having first allocation granularity, so that a control module of the LUN adopts, in the first logical space, second allocation granularity to allocate a second logical space to the write IO instruction, wherein the first allocation granularity is larger than the second allocation granularity.

7. The method according to claim 6, further comprising:
when the write IO instruction is allocated a logical space, receiving the write IO instruction sent by the control module of the LUN, wherein the write IO instruction contains the logical space allocated by the control module of the LUN to the IO instruction; and delivering the write IO instruction to a corresponding physical disk according to the logical space allocated to the write IO instruction and preconfigured correspondence between logical spaces and physical spaces.

8. The method according to claim 6, further comprising:
when a read IO instruction delivered by the host is allocated a logical space, receiving the read IO instruction forwarded by the control module of the LUN, wherein the read IO instruction contains the logical space allocated by the control module of the LUN to the read IO instruction; and according to the logical space allocated to the read IO instruction and preconfigured correspondence between logical spaces and physical spaces, reading data from a physical space corresponding to the read IO instruction, and returning the data to the host through the control module of the LUN.

9. An apparatus for thin provisioning, comprising:
a write instruction receiving module, configured to receive a write IO instruction sent by a host; and
a first write module, configured to, when the write IO instruction is not allocated a logical space and a logical space remaining in a logical unit number LUN is insufficient to be allocated to the write IO instruction, request a physical volume group PVG for a first logical space having first allocation granularity, and in the first logical space, adopt second allocation granularity to allocate a second logical space to the write IO instruction, wherein the first allocation granularity is larger than the second allocation granularity; and send the write IO instruction to the PVG, so that the PVG allocates a corresponding physical space to the write IO instruction according to the second logical space and preconfigured correspondence between logical spaces and physical spaces.

10. The apparatus according to claim 9, further comprising:
a second write module, configured to, when the write IO instruction is not allocated a logical space and the logical space remaining in the LUN is sufficient to be allocated to the write IO instruction, adopt the second allocation granularity to allocate the second logical space to the write IO instruction; and send the write IO instruction to the PVG, so that the PVG allocates a corresponding physical space to the write IO instruction according to the second logical space and the preconfigured correspondence between logical spaces and physical spaces.

11. The apparatus according to claim 9, further comprising:
a third write module, configured to, when the write IO instruction is allocated a logical space, deliver the write IO instruction to the PVG, wherein the IO instruction contains the allocated logical space, so that the PVG allocates a corresponding physical space to the write IO instruction according to the allocated logical space and the preconfigured correspondence between logical spaces and physical spaces.

12. The apparatus according to claim 9, further comprising:
a first read instruction receiving module, configured to receive a read IO instruction delivered by the host; and
a read instruction sending module, configured to, when the read IO instruction is allocated a logical space, deliver the read IO instruction to the PVG, wherein the IO instruction contains the allocated logical space, so that the PVG reads data from a physical space corresponding to the read IO instruction according to the allocated logical space and the preconfigured correspondence between logical spaces and physical spaces.

13. The apparatus according to claim 9, further comprising: a first read module, configured to, when the read IO instruction is not allocated a logical space, return all-zero data to the host.

14. An apparatus for thin provisioning, comprising:
an allocating module, configured to, when a write IO instruction sent by a host is not allocated a logical space and a logical space remaining in an LUN is insufficient to be allocated to the write IO instruction, allocate, to the LUN, a logical space having first allocation granularity, so that a control module of the LUN adopts, in the first logical space, second allocation granularity to allocate a second logical space to the write IO instruction, wherein the first allocation granularity is larger than the second allocation granularity.

15. The apparatus according to claim 14, further comprising:
a write instruction forwarding module, configured to, when the write IO instruction is allocated a logical space, receive the write IO instruction sent by the LUN, wherein the write IO instruction contains the logical space allocated by the control module of the LUN to the write IO instruction; and deliver the write IO instruction to a corresponding physical disk according to the logical space allocated to the write IO instruction and preconfigured correspondence between logical spaces and physical spaces.

16. The apparatus according to claim 14, further comprising:
a second read instruction receiving module, configured to, when a read IO instruction delivered by the host is allocated a logical space, receive the read IO instruction forwarded by the LUN, wherein the read IO instruction contains the logical space allocated by the control module of the LUN to the read IO instruction; and
a second read module, configured to, according to the logical space allocated to the read IO instruction and preconfigured correspondence between logical spaces and physical spaces, read data from a physical space corresponding to the read IO instruction, and return the data to the host through the control module of the LUN.
